# EUROPÄISCHE PATENTSCHRIFT

(11) **EP 1 972 247 B1**
(45) Veröffentlichungstag und Bekanntmachung des Hinweises auf die Patenterteilung: **02.05.2012**
(21) Anmeldenummer: 08000494.8
(22) Anmeldetag: 11.01.2008
(51) Int. Cl.: A47L 9/12, B01D 46/00, B01J 20/28, F02M 35/024, F24F 3/00

(54) **Verwendung eines geruchsabsorbierenden Flächengebildes und Verfahren zur dessen Herstellung**
Use of odour adsorbing fibres and method for the preparation of the same
Utilisation des structures plates absorbants des odeurs et procédé de leur préparation

(30) Priorität: 16.03.2007 DE 102007012743
(43) Veröffentlichungstag der Anmeldung: 24.09.2008
(73) Patentinhaber: Neenah Gessner GmbH, 83052 Bruckmühl (DE)
(72) Erfinder: Klausnitzer, Bernd, Dr., 83052 Bruckmühl (DE); Klimmek, Albrecht, 83052 Bruckmühl (DE); Raabe, Ernst, 83064 Raubling (DE)
(74) Vertreter: Andrae, Steffen

(56) Entgegenhaltungen:
- WO-A-2008/058564
- DE-C1- 19 615 209
- DATABASE CA [Online] CHEMICAL ABSTRACTS SERVICE, COLUMBUS, OHIO, US; SCHULZ, SARAH G. ET AL: "Interaction of surfactants and nanostructured surfaces" XP002485390 gefunden im STN Database accession no. 2005:392537 & COMUNICACIONES PRESENTADAS A LAS JORNADAS DEL COMITE ESPANOL DE LA DETERGENCIA , 35, 237-244 CODEN: CJCDD7; ISSN: 0212-7466, 2005,

## Beschreibung

Die vorliegende Erfindung betrifft das Gebiet der Verbesserung der Luftqualität, insbesondere die Verbesserung der Atemluft in Wohn- und Arbeitsräumen durch Einsatz von Absorbermaterialien, die in der Lage sind, die Belastung der Luft durch unerwünschte Geruchsstoffe zu vermindern. Insbesondere betrifft die Erfindung flächige Absorbermaterialien mit einer für den vorgesehenen Einsatzzweck geeigneten Luftdurchlässigkeit, die an oder in räumlich begrenzten, lokalisierten Quellen von unerwünschten Gerüchen angeordnet werden können und dafür sorgen, dass die von diesen Quellen entwickelten Gerüche gebunden werden und nicht in die Atemluft gelangen. Insbesondere sind die flächigen Absorbermaterialien für eine Verwendung in oder an Gebrauchsgegenständen oder Geräten, insbesondere auch technischen Geräten, für den Haushalt oder den anderweitigen täglichen Lebensbedarf bestimmt.

Ein besonders hervorzuhebendes Anwendungsgebiet der vorliegenden Erfindung ist eine Verwendung im Inneren von Staubsaugern, wo der bereits in den Staubsaugerfilter eingesaugte und sich dort über die Zeit, in der noch keine Austausch des Filters erforderlich ist, immer weiter ansammelnde Staub eine Quelle unerwünschter Gerüche darstellt. In der vorliegenden Anmeldung werden daher der Zweck und die Wirkungsweise der erfindungsgemäßen Absorbermaterialien vorrangig am Beispiel eines Staubsaugers erläutert, wobei sich jedoch,aus diesen Erläuterungen und den nachfolgend kürzer behandelten weiteren Beispielen für den Fachmann weitere Anwendungsmöglichkeiten für die erfindungsgemäßen Absorbermaterialien z.B. im Haushalt, im Kraftfahrzeugbereich und anderen verwandten Bereichen, darunter auch im Gesundheitswesen, ergeben.

Beim Staubsaugen gelangen mit dem eingesaugten Staub zahlreiche Bestandteile, z.B. Krümel und Brocken von Essensbestandteilen, Teilchen aus der Tierhaltung, Tabakrauch, allgemeiner Hausstaub und in der zu reinigenden Umgebung vorkommende Mikroorganismen, in den Staubsauger-Filterbeutel, die entweder von Haus aus Geruchsstoffe freisetzen ("riechen") oder sich im Staubsauger-Filterbeutel allmählich zersetzen oder dort verrotten und im Ergebnisse derartiger Vorgänge beginnen, unangenehm zu riechen. Solange der Staubsauger nicht verwendet wird, verbleiben diese Gerüche im wesentlichen im Inneren des Staubsaugers und stellen meist keine größere Belastung für die Raumluft dar. Wird der Staubsauger jedoch wieder in Betrieb genommen, werden diese Gerüche zusammen mit ihrer Trägeratmosphäre von der angesaugten Außenluft aus dem Filterbeutel verdrängt und aus dem Staubsauger herausgeblasen. Daher kommt es bei der Wiederinbetriebnahme eines Staubsaugers häufig zur Abgabe einer Wolke unangenehmen Geruchs, der von vielen als Belästigung empfunden wird und es z.B. nötig machen kann, nach dem Staubsaugen die frisch gesaugten Räumlichkeiten gründlich zu lüften.

Angesichts dieser unangenehmen Erscheinung gab es bereits verschiedene Vorschläge, die geschilderte Geruchsentwicklung dadurch zu verhindern oder wenigstens zu vermindern, dass man das Herausblasen der Geruchsstoffe aus dem Staubsauger verhindert, so dass sie nicht in die Raumluft gelangen. So wird beispielsweise in der DE 195 13 658 A1 vorgeschlagen, in einem Staubsauger hinter dem Staubfilter und vor der Turbine, die die von ihr durch den Filter angesaugte Luft aus dem Staubsauger herausbläst, einen besonderen Geruchsfilter anzuordnen, der als luftdurchlässiger Träger mit einer an den Träger gebundenen abriebfesten Form von Aktivkohle ausgeführt ist. Bei diesem Vorschlag kommt der Geruchsfilter jedoch nur dann mit der zu reinigen Luft in Kontakt, wenn diese als Luftstrom durch den Filter gesaugt wird. Beim Einschalten des Staubsaugers wird der Filter daher stoßartig von einer Geruchswolke aus dem Filterinnenraum überschwemmt, die innerhalb kurzer Zeit durch den Filter hindurchgetreten ist, und es hat sich als schwierig erwiesen, in der relativ kurzen Kontaktzeit eine befriedigende Geruchsentfernung aus dem bewegten Luftstrom zu erreichen.

Gemäß der DE 196 15 209 C1 und weiteren, in der Einleitung der DE 196 15 209 C1 diskutierten Dokumenten wurde daher auch schon vorgeschlagen, die Gerüche aus einem Staubsaugerbeutel nicht während es Betriebs des Staubsaugers aus der strömenden Abluft zu entfernen, sondern dafür zu sorgen, dass sie dann, wenn der Staubsauger nicht in Betrieb ist, von einem Absorbermaterial aus einer statischen Atmosphäre heraus gebunden werden. Dazu muss sich das jeweils vorgesehene Absobermaterial jedoch auch dann, wenn der Staubsauger nicht eingeschaltet ist, in einem direkten Kontakt mit der Atmosphäre im Inneren des Staubfilters befinden, damit es verhindern kann, dass sich diese Atmosphäre überhaupt mit unerwünschten Gerüchen sättigen kann. Als Absorbermaterial wird ein Filterpapier vorgeschlagen, das mit festen Adsorberpartikeln mindestens einseitig imprägniert ist, und das in Kombination mit einem Partikelfilter verwendet wird. Als Adsorberpartikel werden Materialien auf Aktivkohlebasis und natürliche oder synthetische Zeolithe erwähnt. Bei dem Vorschlag gemäß DE 196 15 209 C1 kann es aufgrund mechanischer Belastungen jedoch zum Austrag der Adsorberpartikel aus der ausgerüsteten Schicht und damit zur Verstopfung der nachfolgenden Partikelfiltrationslage kommen, was eine abnehmende Luftdurchlässigkeit des Filters und damit eine verminderte Gebrauchsdauer zur Folge hat. Weiterhin kann ein Austrag der Adsorberpartikel aus dem Beutel nie vollständig verhindert werden, womit es zu einer Belastung der eigentlich von Partikeln zu befreienden Luft kommt. Außerdem wird durch den Adsoberverlust die Adsorptionskapazität im Filterbeutel allmählich immer weiter reduziert.

Ein verwandter weiterer, mehr oder weniger einschlägiger Stand der Technik wird nachfolgend zur Vervollständigung angeführt, der sich damit befasst, im Bereich der Staubfilterbeutel Gerüche des eingesaugten Schmutzes vor dem Ausblasen der Luft wirksam zu eliminieren. So wurde auch vorgeschlagen, Aktivkohle in zusätzlichen speziell gefertigten Filterkassetten im Luftstrom des Saugers zu platzieren (vgl. DE 42 40 172, DE 42 04 553), mit den Nachteilen, dass durch diese zusätzlichen Baugruppen die Saugleistung leidet und durch die räumliche Trennung von Geruchsquelle und Geruchsadsorber eine Geruchsadsorption nur während des Betriebs des Staubsaugers erfolgt.

Die WO 00/40134 schlägt vor, in einer Lage eines mehrschichtigen Filtrationsmediums den Adsorber lose bzw. in einer dreidimensionalen Gerüststruktur (z.B. Schaumstoff) anzuordnen. Als Nachteile sind hier insbesondere die schlechte Handhabung während der Herstellung des Mediums zu nennen (Stauben, Rieseln, ungleichmäßige Verteilung durch Rütteln, das Vorhandensein einer Trennschicht bei der Lagenverbindung durch Schweißen oder Kleben).

Die DE 195 31 343 beschreibt ein Verfahren, bei dem das geruchsadsorbierende Element räumlich getrennt, aber in unmittelbarer Nähe zum Staubbeutel angeordnet ist. Hier ist die umständliche Handhabung beim Wechsel der Filterelemente anzumerken, da die Kapazitäten zweier separater Komponenten zu verschiedenen Zeiten erschöpft sein können. Somit ist eine ständige Kontrolle der Funktionsfähigkeit angebracht. Die Funktionalität ist nur beim aktiven Durchströmen des Elements bei eingeschaltetem Staugsauger gewährleistet, während in Ruhephasen die Adsorption aufgrund der räumlichen Trennung behindert ist.

Neben Aktivkohlepartikeln kommen für Verwendungen der genannten Art auch partikelförmige Zeolithe zum Einsatz. So wird z.B. in der EP 1 674 014 A1 die Verwendung von insbesondere Zeolithpartikeln in immobilisierter Form auf der abströmseitig äußersten Lage eines mehrschichtigen Filters vorgeschlagen. Ein Nachteil der Verwendung von Zeolithen ist jedoch generell deren hohe Selektivität und damit eingeschränkte Bindungsfähigkeit für verschiedene Bestandteile eines Geruchs, der in der Regel eine komplexe Mischung verschiedener Geruchsstoffe ist, und die Reversibilität der Geruchsadsorption, zusammen mit der abrasiven Wirkung der Zeolithpartikel im Herstellungsprozess und bei späteren Verarbeitungsschritten.

Generell ist beim Einsatz von partikelförmigen Adsorbern die Immobilisierung dieser Stoffe problematisch, da eine Fixierung der Partikel auf einem Trägermaterial z.B. durch einen Kleber zum Verlust von Adsorptionskapazität führen kann, da die Gefahr der Versiegelung der Oberfläche der Partikel besteht.

Die bisher diskutierten Adsorbermaterialien (Aktivkohle, Zeolithe) gehören einem Typ von Materialien an, die aufgrund einer großen adsorptionsfähigen freien Oberfläche bestimmte aus dem Gasraum zu entfernende Geruchsstoffe im wesentlichen adsorptiv binden, z.B. an ihrer inneren Oberfläche, z.B. im Zeolith-Kristallgitter, oder in ihren Poren (Meso- oder Mikroporen z.B. der Aktivkohle). Eine weitere Substanzklasse mit einem vergleichbaren Wirkungsprinzip sind die sogenannten Cylodextrine.

Materialien der genannten Art weisen jedoch, insbesondere wenn sie allein verwendet werden, eine Reihe von Unzulänglichkeiten auf, die sie als suboptimale Wahl erscheinen lassen:

Aktivkohle ist für Anwendungen präferiert, bei denen ein breites Wirkungsspektrum, hohe Kapazitäten und eine gute Kinetik von Bedeutung sind. Ein Nachteil liegt in einer gewissen Reversibilität der adsorptiven Bindung, die sich z.B. als Tendenz zeigt, dass es bei hoher kapazitiver Sättigung zu einer Desorption der vorher adsorbierten Geruchsstoffe kommt, und dass eine kompetitive Verdrängung von adsorbierten Molekülen durch andere, die eine höhere Affinität für die Oberfläche der Aktivkohle aufweisen, beobachtbar ist. Besonders aromatische Kohlenwasserstoffe (Benzol, Toluol, Xylol, abgekürzt BTX) konkurrieren mit anderen Molekülen um freie Oberflächen auf der Aktivkohle. Aufgrund ihrer Sprödigkeit sowie schwarzen Farbe ist ihr Einsatz außerdem auf Gebiete beschränkt, bei denen mechanische Toleranz und die Oberflächenerscheinung nicht wesentlich sind.

Die Klasse der Zeolithe zeigt, je nach dem genauen Aufbau der jeweiligen Kristallstruktur, eine hohe Adsorptionsspezifität. Je nach dem Verhältnis von Silizium zu Aluminium in der Kristallstruktur erhält man mehr oder weniger ausgeprägte hydrophile Eigenschaften in den Hohlräumen des Kristallgitters. Durch die ausgeprägte Selektivität bezüglich der Polarität des Gastmoleküls besteht eine hohe Wahrscheinlichkeit einer kompetitiven Verdrängung aus dem Wirtsgitter. Zeolithe sind i.d.R. farblos, jedoch als harte körnige Partikel nicht für alle Applikationsformen geeignet.

Cyclodextrine besitzen, bedingt durch ihre Molekülform, bei der die hydrophilen OH-Gruppen der Zucker-Grundeinheiten nach außen weisen und sich in der Kavität ein hydrophober Bereich ausbildet, ein engeres Wirkungsspektrum speziell für lipophile Moleküle und eine langsamere Adsorptionskinetik. Zudem kommt es bei ihnen wie bei Aktivkohle oder den Zeolithen zur Desorption durch kompetitive Verdrängung bzw. Eluierung.

Was in der vorliegenden Anmeldung bisher anhand der Verhältnisse in einem Staubsauger erläutert wurde, gilt mehr oder weniger auch für andere Bereiche des täglichen Lebens, wo sich unerwünschte Gerüche entwickeln. So finden sich, oder entstehen, unerwünschte Gerüche und geruchsgesättigte statische Gasräume (geruchsgesättigte ruhende Atmosphären) auch anderweitig, z.B. in anderen mehr oder weniger geschlossenen Abfallbehältern, z.B. Abfalleimern, Behältern mit medizinischem Abfall, Behältern mit Essensresten u.ä., Schuhen, aus denen sie beim Öffnen der Behälter plötzlich austreten und in die Raumluft gelangen können. Auch in engen Räumen mit einer hohen Belegungsdichte durch Personen und/oder Tiere, z.B. im Innenraum von Fahrzeugen, in Transporträumen, entwickeln sich geruchsbelastete relativ abgeschlossenen Atmosphären, die sich außerdem z.B. auch innerhalb von technischen Geräten finden lassen, z.B. solchen mit Luftkühlung. Dabei ist eine Geruchsabsorption aus geruchsbelasteten abgeschlossenen Atmosphären ohne wesentlichen Luftaustausch mit der Umgebungsluft auch dann als "statisch" anzusehen, wenn eine solche Atmosphäre zur Intensivierung des Kontakts mit dem Absorber umgewälzt wird. Auch in der Nachbarschaft von Geruchsabzügen oder Dunstabzugshauben für Küchengerüche kann sich eine geruchsbelastetes Mikroklima ausbilden, in dem sich Gerüche ausbreiten und anreichern. Soweit sich im jeweiligen Einzelfall eine Übertragung der Lehre der vorliegenden Erfindung für den Fachmann nicht aus besonderen, fallspezifischen Gründen verbietet, kann diese Lehre auch auf derartigen anderen Anwendungsgebieten, d.h. außerhalb des engen Bereichs der Luftverbesserung beim Staubsaugen, angewandt werden, ohne dass hierin alle möglichen Einzelfälle ausdrücklich aufgelistet werden müssen.

Es ergibt sich aus der o.g. Schilderung des Standes der Technik, dass weiterhin ein Bedarf nach einer wirkungsvollen Verminderung der Belastung der Atem- oder Raumluft durch unerwünschte Gerüche aus verschiedenen Geräten und Gegenständen der Haushalts oder täglichen Lebensbedarfs besteht, für die ein Staubsauger ein wichtiges Beispiel ist.

Es kann daher als Aufgabe der vorliegenden Erfindung bezeichnet werden, für Anwendungen der oben beschriebenen Art neue verbesserte Geruchsabsorber zu entwickeln, die Flächengebilde vom Papier- oder Vliestyp oder textile Flächengebilde mit der für den speziellen Anwendungsfall zu fordernden Luftdurchlässigkeit und Festigkeit darstellen und bei denen zur Geruchsbeseitigung Materialien verwendet oder wenigstens mitverwendet werden, die eine praktisch irrversible Bindung von Geruchsstoffen unter den jeweiligen Einsatzbedingungen gewährleisten.

Es kann als eine weitere Aufgabe der vorliegenden Erfindung bezeichnet werden, praxistaugliche Verfahren zur Herstellung derartiger Geruchsabsorber zu entwickeln, die die handhabungstechnischen Besonderheiten des ausgewählten Absorbermaterials berücksichtigen.

Weitere Aufgabe und Vorteile der vorliegenden Erfindung ergeben sich für den Fachmann aus den nachfolgenden allgemeinen Erläuterungen und aus den Anwendungsbeispielen, die derzeit bevorzugte Ausführungsformen der Erfindung offenbaren, jedoch reinen Beispielcharakter aufweisen und die Erfindung nicht einschränken sollen.

Diese Aufgabe wird durch die Verwendung geruchsabsorbierender Flächengebilde gemäß Anspruch 1 und den darauf rückbezogenen Ansprüchen 2 bis 9 und durch Verfahren zur Herstellung derartiger Flächengebilde gemäß den Ansprüchen 10 bis 12 gelöst.

Weitere Merkmale, die die Erfindung auszeichnen und zur Lösung der obigen Aufgaben beitragen, kann der Fachmann der nachfolgenden Beschreibung und den darin zu findenden Erörterungen der Produkt- und Verfahrensmerkmale sowie der Vorteile verschiedener beschriebener Ausführungsformen und Beispiele der Erfindung entnehmen.

Die vorliegende Erfindung beruht darauf, dass für die Zwecke der in der Beschreibungseinleitung geschilderten Art ein an sich bekannter, jedoch üblicherweise für andere Anwendungszwecke eingesetzter Geruchsabsorbertyp verwendet wird, bei dem Gerüche praktisch irreversibel durch einen als Chemisorption beschreibbaren Vorgang gebunden werden, und dass die mit der Verwendung eines solchen Geruchsabsorber-Materialtyps verbundenen praktischen technischen Schwierigkeiten bei der Herstellung luftdurchlässiger Flächengebilde insbesondere vom Papier- und/oder Vliestyp (englischer Begriff für Vliesstoffe: nonwovens) überwunden werden konnten.

Das angesprochene Geruchsabsorbermaterial gehört zur Klasse der Metallseifen, d.h. zu den Metallsalzen längerkettiger Fettsäuren, und die bevorzugte Verbindung aus der Klasse dieser Materialien ist die Verbindung Zink-Ricinoleat.

Zink-Ricinoleat wurde erstmalig in den Patentanmeldungen DE 37 26 626 A1 und DE 38 08 114 A1 als Substanz mit einer besonderen geruchsabsorbierenden Wirkung beschrieben. Für diese Verbindung wurden seitdem zahlreiche konkrete oder allgemeinere hypothetische Einsatzmöglichkeiten vorgeschlagen, bei denen diese Geruchsabsorption genutzt wird. So wird beispielsweise in den Schriften EP 1 250 938 A1 oder EP 1 319 394 A1 eine eine bestimmte Formulierung von Zink-Ricinoleat beinhaltende Lösung zur Verwendung in Desodorantien geschützt. Auch ein Einsatz z.B. als geruchsverbessernder Zusatz zu Waschmitteln und als Imprägnierungsbestandteil zur Beseitigung von Schweissgeruch in Bekleidungstextilien wurde bereits vorgeschlagen. Die beobachtete Wirkung von Zink-Ricinoleat wird in verschiedenen wissenschaftlichen Veröffentlichen untersucht und genauer mechanistisch erklärt, so u.a. in den Veröffentlichungen Boehmer, Mueller, Peggau, Tenside Surf Det. 41 (2004), 6, S. 283-286; Kuhn, Müller, Peggau, Zekorn, J. of Surfactants and Detergents, Vol. 3, No. 3 (July 2000); Zekorn, Cosmetics and Toiletries Mag., Vol. 112 (Nov. 1997), S.37.

In allen Schriften wird auf die Notwendigkeit einer Verwendung von Zink-Ricinoleat als flüssige Formulierung verwiesen. Ein Einsatz als trockene feste Substanz auf flächigen Trägern ist nicht erwähnt.

Hauptanwendungsgebiet von Zink-Ricinoleat ist die Körperpflege-Kosmetik, wo es durch seinen ambivalenten Charakter, d.h. seine Fähigkeit, sowohl nukleophile (basische) als auch elektrophile (saure) Geruchsmoleküle zu binden, besonders viele Vorteile aufweist. Der Bindung erfolgt im Gegensatz zu Cyclodextrinen und Aktivkohle irreversibel (Chemisorption), die Kinetik der Bindung ist allerdings vergleichsweise langsam.

Durch die wachsartige Konsistenz von Zink-Ricinoleat bei einer gleichzeitig nur geringen Löslichkeit in gängigen Lösungsmitteln erschien ein Einsatz auf flächigen Gebilden vom Papier- oder Vliestyp zur Schaffung von Absorbermaterialien für den Haushalt und sonstigen täglichen Lebensbedarf schwierig und kaum machbar.

Die Erfinder haben jedoch festgestellt, dass man Zink-Ricinoleat unter gewissen Voraussetzungen und unter Anwendung der nachfolgend noch in näheren Einzelheiten beschriebenen bevorzugten Techniken des Auftrags aus verdünnten Dispersionen (Suspensionen) oder des Aufsprühens in Form feinster Schmelzetröpfchen dauerhaft auf Flächengebilde aus pflanzlichen oder Synthetischen Fasern auftragen kann, ohne die sonstigen, für seine Endverwendung wichtigen Gebrauchseigenschaften des Flächengebildes, insbesondere seine Luftdurchlässigkeit, Porenstruktur und mechanischen Eigenschaften wie Festigkeit und Berstdruck, zu beeinträchtigen. Auch wenn in der vorliegenden Anmeldung vorrangig von Flächengebilden vom Papier- und/oder Vliestyp gesprochen wird, soll die Verwendung oder Mitverwendung von textilen Materialien mit geeigneten Eigenschaften, z.B. als gewebte, gewirkte oder gestrickte Lagen oder Verstärkungslagen in Verbundmaterialien, ausdrücklich nicht ausgeschlossen werden.

Ferner wurde ferner festgestellt, dass Zink-Ricinoleat in einer nach den genannten Verfahren erhältlichen feinverteilten Form auf einem luftdurchlässigen Träger vom Papier- und/oder Vliestyp auch im festen Zustand hervorragende Geruchsabsorptionseigenschaften aufweist.

Die erfindungsgemäßen bzw. erfindungsgemäß herzustellenden Gerauchabsorptionsmaterialen sind Flächengebilde insbesondere vom Papier- oder Vliestyp oder Kombinationen davon. Grundsätzlich bestehen bezüglich der Verwendbarkeit bestimmter derartiger Flächengebilde keine anderen Einschränkungen und Auswahlregeln, als sie für derartige Flächengebilde für einen entsprechenden technischen Einsatz dem Fachmann bereits geläufig sind. Es können somit alle Typen von Papier- oder Vliesmaterialien, oder beliebige Kombinationen davon, verwendet werden, wie sie bereits für vergleichbare Verwendungen, allerdings ohne Ausrüstung mit Zink-Ricinoleat, zur Anwendung kommen. In diesem Zusammenhang wird zur diesbezüglichen Ergänzung der vorliegenden Offenbarung beispielsweise verwiesen auf die Übersicht über die Herstellung von Papieren und nassgelegten Vliesstoffen in "Vliesstoffe, Teil II: Herstellungsverfahren für Vliesstoffe" herausgegeben von W. Albrecht, H. Fuchs, W. Kittelmann, WILEY-VCH Verlag GmbH, Weinheim, 2000; auf die Offenbarung in der Patentanmeldung EP 1 674 014 A1, oder der Patentanmeldung EP 1 199 094 A1. Auch aus den nachfolgenden Beispielen erhält der Fachmann weitere Informationen und Anregungen bezüglich der für die jeweiligen Anwendungszwecke geeigneten Basis-Flächengebilde.

Flächengebilde, die für Filtermedien zur Luftfiltration eingesetzt werden, weisen üblicherweise eine Flächenmasse von 10 bis 1000 g/m² (bestimmt gemäß DIN EN ISO 536) und eine Luftdurchlässigkeit von 25 - 10 000 l/m²s (bestimmt gemäß DIN EN ISO 9237 bei 200 Pa) auf. Wenn sie als Staubsaugerbeutel eingesetzt werden, liegt die entsprechende Flächenmasse vorzugsweise im Bereich von 40 - 300 g/m², und die Luftdurchlässigkeit im Bereich von 25 bis 2000 l/m²s.

Flächengebilde, die für die Zwecke der vorliegenden Erfindung geeignet sind, können z.B. solche auf Basis von pflanzlichen oder synthetischen Fasern oder Mischungen daraus sein, die nach einem Nasslegeverfahren hergestellt wurden. Sie können auch vollsynthetische Nonwovens sein, die als Spinnvliese, Krempelvliese oder Meltblown hergestellt wurden. Ferner können sie z.B. auch nach dem Airlaidverfahren aus Zellstoff, Synthesefasern oder Mischungen daraus hergestellt worden sein. Zur Verfestigung können die Flächengebilde mit einem Bindemittel imprägniert sein oder Schmelzbindefasern/Bikomponentenfasern enthalten. Ferner können sie einen Lagenaufbau aufweisen, z.B. einen Lagenaufbau, der sich aus Papier und/oder nassgelegtem Vlies und/oder synthetischen Nonwovens zusammensetzt.

Alle derartige Flächengebilde können erfindungsgemäß mit Zink-Ricinoleat ausgerüstet werden, wobei eine der nachfolgend diskutierten Techniken zum Einsatz kommen kann, wenn die besonderen Eigenschaften von Zink-Ricinoleat angemessen berücksichtigt werden.

Reines Zink-Ricinoleat ist bei Raumtemperatur eine wachsartige Substanz von geringer Härte. Es ist daher nicht möglich, den in Form von groben Pellets (Ø ca. 5mm) vorliegenden Rohstoff unter Umgebungsbedingungen mit Hilfe mechanischer Verfahren zu einer für die beabsichtigte Anwendung passenden Partikelgröße (Durchmesser << 0,5 mm) zu zerkleinern. Es ist daher ein anderer Weg zu wählen, der eine Feinverteilung der Absorbersubstanz Zink-Ricinoleat auch bei geringen Auftragsmengen auf dem Flächengebilde-Träger ermöglicht.

Grundsätzlich waren hierzu vorrangig geeignete Ausführungsformen üblicher Verfahren zur Applikation von Bindemitteln oder ähnlichen Stoffen, wie Imprägnierung, Sprühen, Tauchen, Bedrucken, Schäumen usw. in Betracht zu ziehen. Bei diesen wird nach der Einwirkung des flüssigen Behandlungsmaterials zur Eliminierung der als Träger verwendeten Flüssigkeit, üblicherweise Wasser, das Flächengebilde abschließend mittels üblicher Verfahren getrocknet, z. B. Zylindertrocknung, Durchlufttrocknung, Strahlungstrocknung, Schwebetrockner usw.. Auch derartige Verfahren sind in allgemeiner Form und beispielhaft in "Vliesstoffe, Teil II: Herstellungsverfahren für Vliesstoffe", herausgegeben von W. Albrecht, H. Fuchs, W. Kittelmann, WILEY-VCH Verlag GmbH, Weinheim, 2000 beschrieben.

Zur Erzeugung kleiner Partikel für einen Auftrag auf ein Flächengebilde, insbesondere eines mit hoher Luftdurchlässigkeit, bot sich dabei die Erprobung verschiedener an sich bekannter Verfahrensweisen an:

Eine davon ist das sogenannte Kaltmahlverfahren, bei welchem durch Kühlen die Glasumwandlungstemperatur des Mahlguts unterschritten wird, was zu einem Verspröden und damit einer ausreichenden mechanischen Härte für den angestrebten Zerkleinerungsprozess führt. Als Nachteil muss jedoch angeführt werden, dass nach dem Mahlprozess die Glastemperatur wieder überschritten wird und es zum Erweichen des Mahlgutes kommt.

Die erhaltenen Partikel können in nachfolgenden Prozessschritten, die größere Druck- oder Scherkräfte entfalten, reagglomerieren. Dies kann nur dadurch vermieden werden, dass das Mahlgut noch vor seiner Erwärmung auf Umgebungsbedingungen weiteren Verarbeitungsschritten zugeführt wird, sei es direkt in einen Beschichtungsprozess oder aber vorgelagert einer stabilisierenden Prozedur, z.B. einem Aufschlämmen in einem Dispergiermittel. Für Zink-Ricinoleat wird eine solche Verfahrensweise derzeit angesichts vorteilhafterer Verfahren als weniger geeignet angesehen und ist derzeit nicht bevorzugt.

Einen besseren Weg stellt die direkte Erzeugung einer Dispersion von feinen Partikeln in einem Dispergiermittel (i.d.R. Wasser) dar, wodurch eine genaue Konzentrationseinstellung sowie eine homogene Verteilung der Partikel zugänglich wird. Praktisch wird eine Dispersion durch Eintrag der geschmolzenen oder gelösten Substanz in ein im großen Überschuss vorliegendes Dispergiermittel erzeugt, in welchem die Substanz auf Grund ihrer geringen Löslichkeit ausfällt und es zur Bildung von feinen Kristalliten oder amorphen Präzipitaten kommt. Maßgeblich beeinflusst wird die Partikelgröße der zugegebenen Substanz bei diesem Verfahrenstyp durch die Konzentrationsverhältnisse, die Zugabezeit, die Effektivität des Rührens, Scherkräfte und die Temperatur des Dispergiermittels. Idealerweise wird die Substanz unter starkem Rühren langsam in einen großen Überschuss eines möglichst kühlen Dispergiermittels zugegeben. Die so erhaltene Dispersion wird vorzugsweise sofort weiteren Prozessschritten zugeführt, um Alterungseffekten, z.B. einer Agglomerierung und Sedimentation der dispergierten Teilchen, vorzubeugen.

Ein weiterer vorteilhafter und für die Zwecke der vorliegenden Erfindung vielfach besonders gut geeigneter Weg liegt in der direkten Erzeugung kleiner Partikel durch Versprühen der geschmolzenen oder gelösten geruchsabsorbierenden Substanz. Dabei wird die Substanz vernebelt, und es kommt zur Bildung von feinen Tröpfchen oder Filamenten. Die aus der Schmelze versprühte Substanz kühlt durch Zuführung kühler Luft noch im Luftstrom weitgehend ab und schlägt sich in Form weitgehend diskreter erstarrter oder erstarrender Tröpfchen auf dem Substrat (Flächengebilde) nieder. Analog verläuft der Prozess bei der Vernebelung von Lösungen, jedoch kommt es dabei zusätzlich noch zum Verdampfen des Lösungsmittels. Da in der Lösung die Substanz in verdünnter Form vorliegt, ist es durch Versprühen einer Lösung - abhängig vom Konzentrationsverhältnis - häufig möglich, einen noch geringeren Partikel- bzw. Filamentdurchmesser zu erreichen. Nach dem Niederschlag auf dem Substrat kann die aufgebrachte Substanz soweit erforderlich oder gewünscht noch zusätzlich durch verschiedene Verfahren auf dem Substrat fixiert werden, u.a. durch Kalandrieren, Abdecken mit einer zusätzlichen Lage oder durch thermische Fixierung.

Für das Aufbringen von Zink-Ricinoleat werden derzeit die genannten Techniken des Aufbringens aus einer Dispersion oder als Schmelzenebel bevorzugt. Dabei wird vorzugsweise wie folgt vorgegangen:

### a. Dispersionsverfahren:

Herstellung einer Dispersion von Zink-Ricinoleat:
Zink-Ricinoleat wird in einem geeigneten Lösungsmittel, z.B. Triethanolamin, unter Erwärmen mit einem Anteil von max. 60% gelöst. Die erhaltene Lösung lässt man unter starkem Rühren langsam in ein als Lösungsmittel für Zink-Ricinoleat nicht geeignetes Dispergiermittel (z.B. Wasser) zulaufen, worauf sich das Lösungsmittel im Dispergiermittel löst und die Löslichkeit des Zink-Ricinoleats im Dispergiermittel unterschritten wird, was zum Ausflocken führt.

Auftrag des Zink-Ricinoleats als Dispersion:
Das Zink-Ricinoleat wird, wie beispielhaft im nachfolgenden erfindungsgemäßen Beispiel 1 noch näher gezeigt wird, in feinst dispergierter Form bei der Zubereitung der Bindemittelmischung für ein Flächengebilde vom Papiertyp zugegeben. Die Dispersion kann auch in situ bei der Mischung der Komponenten erzeugt werden. Letzteres geschieht durch Zugabe einer Lösung des Zink-Ricinoleats in einem geeigneten Lösungsmittel zum Binderansatz, welcher im Wesentlichen eine wässrige Phase darstellt. Durch die Vermischung der Lösung des Zink-Ricinoleats mit Wasser kommt es zur Fällung des Zink-Ricinoleats aus seinem Lösungsmittel. Hierbei muss für eine ausreichende Durchmischung gesorgt werden, damit es nicht zu Verklumpungen kommt. Die erhaltene Suspension wird dann z.B. einer Leimpresse zugeführt, mit der sie aufgetragen wird. Bei der anschließenden Trocknung kommt es zum Verdampfen des Wassers und anderer flüchtiger Lösungsmittel, und die bindenden Komponenten erzeugen Bindepunkte zwischen den Fasern. Außerdem kommt es zum Aufschmelzen der dispergierten Partikel des Zink-Ricinoleats ohne Bildung eines durchgehenden Films oder Porenverschluss und nachfolgend zu einem Aufziehen der Schmelze auf die Oberflächen der Fasern. Dies sorgt für die größtmögliche Oberfläche des Geruchsabsorbers, ohne dass die Luftdurchlässigkeit des Filtermediums beeinträchtigt wird.

Im nachfolgenden erfindungsgemäßen Beispiel 2 wird der Träger durch ein Tauchbad geführt, welches eine Dispersion von Zink-Ricinoleat-Partikeln enthält. Nach der Benetzung mit der Dispersion wird die imprägnierte Bahn einem Trockenprozess - wahlweise z.B. mit einem Strahlungs- oder Durchlufttrockner - unterzogen. Bei Überschreiten der Schmelztemperatur des Zink-Ricinoleat auf der Oberfläche zieht die Schmelze des Geruchsabsorbers auf die Oberfläche der Faserbestandteile des Trägers auf.

### b. Auftrag mittels Sprühverfahren:

Eine Schmelze des Geruchsabsorbers (Zink-Ricinoleat) wird unter Druck in eine Vorrichtung gefördert, die das Versprühen der Schmelze durch Düsen geringen Durchmessers ( < 0,5 mm) ermöglicht. Aufgrund des geringen Bohrungsdurchmessers der Düsen kommt es bei dem gleichzeitig anliegenden hohen Druck durch starke Scherkräfte am Düsenausgang zu einer Vernebelung und einer Abscheidung der Schmelze auf das Flächengebilde (Papier, Vlies, Textilie) in Form sich niederschlagenden feinen diskreten Nebeltröpfchen. Bei geringerem Druck (größerem Düsendurchmesser bzw. geringerer Förderleistung) ergeben sich statt Tröpfchen Filamente, die linienförmig auf der Oberfläche des Substrates abgelegt werden und dabei oder danach erstarren.

Der mengenmäßige Auftrag kann bei beiden Varianten durch den Durchsatz der Schmelze und die Laufgeschwindigkeit des Substrates geregelt werden. Praktikabel ist bei dieser Technik ein Auftrag von 0,1 bis 5% der Flächenmasse des Substrates.

Bei den oben beschriebenen Techniken werden Flächengebilde erhalten, die nur den Geruchsabsorber Zink-Ricinoleat als Imprägnierung bzw. punktförmige Tröpfchen auf den Fasern des Flächengebildes aufweisen, wobei im Falle des Auftrags in Form eines Nebels aus der Schmelze der Auftrag bevorzugt oder ausschließlich auf nur einer Seite des Flächengebildes erhalten wird.

Es liegt jedoch im Bereich der vorliegenden Erfindung, Zink-Ricinoleat oder die damit imprägnierten Flächengebilde in Kombination mit anderen geruchsbindenden Substanzen einzusetzen, wofür z.B. die folgenden Überlegungen sprechen können:
Zink-Ricinoleat ist ein Geruchsabsorber mit einer hohen Absorptionsfähigkeit für sowohl nukleophile (basische) als auch elektrophile (saure) Substanzen, z.B. Geruchsstoffe. Es ist daher an sich geeignet, als Breitband-Geruchsabsorber zu dienen.

Andererseits ist Zink-Ricinoleat jedoch eine für die angestrebten Verwendungszwecke und Produkte, für die es gewisse ökonomische Schranken bei der Preisgestaltung gibt, eher teure Substanz, die außerdem bei einem längeren Kontakt mit der zu desodorierenden Atmosphäre besser wirkt als bei einer kurzen Kontaktzeit.

Unter Berücksichtigung dieser Gegebenheiten kann es vortelhaft sein, Zink-Ricinoleat in einem Geruchsabsorber nicht als einzige Substanz zur Geruchsbindung einzusetzen. Beispielsweise kann es vorteilhaft sein, Zink-Ricinoleat in ein- und demselben Flächengebilde, oder durch Kombination mit einem zweiten Flächengebilde, mit einem zweiten, kostengünstigeren Geruchsadsorber zu kombinieren, der die zu entfernenden Geruchsstoffe vorzugsweise nach einem anderen Wirkmechanismus entfernt. Ein solches Vorgehen bietet sich beispielsweise an, wenn gewisse, an sich auch mit anderen Mitteln leicht zu entfernende Substanzen in dem geruchsbelasteten Gasraum in einem mengenmäßig hohen Anteil vorkommen, z.B. bestimmte saure oder basische oder lipophile Substanzen, die gut auch an partikelförmige Adsorber wie z.B. Aktivkohle oder Zeolithe oder an Cylcodextrine binden. Sorgt man dafür, dass solche Substanzen nicht von dem Zink-Ricinoleat gebunden werden müssen, indem man vorgeschaltet z.B. eine Bindung an einen solchen anderen Geruchsadsorber ermöglicht, kann man dessen Absorptionsfähigkeit und damit Nutzungsdauer über längere Zeiträume erhalten als bei seiner alleiniger Verwendung.

Man kann zu diesem Zweck beispielsweise so vorgehen, dass man das Zink-Ricinoleat als gesondertes Flächengebilde oder als Oberflächenschicht, z.B. als im Schmelzauftrag aufgebrachte Schicht, auf der von der Geruchsquelle abgewandten Seite eines als Geruchsabsorber dienenden Flächengebildes anordnet, das in seiner Substanz oder als weitere Lage einen anderen, z.B. partikelförmigen Geruchsadsorber enthält. Dann ist die mit dem Zink-Ricinoleat in Kontakt tretenden Atmosphäre bereist vorgereinigt, und die Menge an zu bindendem Geruchsstoff ist geringer. Bei einem solchen Vorgehen können auch selektive Adsorptionseigenschaften, die sich bei alleiniger Verwendung eines selektiven Geruchsadsorbers wie z.B. eines bestimmten Zeoliths als Nachteil darstellen, planmäßig eingesetzt werden und von Vorteil sein, besonders, wenn man es mit bestimmten, in ihrer molekularen Zusammensetzung bekannten Geruchsstoffkombinationen zu tun hat.

Ferner kann die Kombination eines Adsorbers mit hoher, jedoch reversibler Adsorptionskinetik mit Zink-Ricinoleat auch unter Gesichtspunkten der Verbesserung der Gesamt-Bindungskinetik eines Kombinationsmaterials und der Vollständigkeit der Geruchsabsorption bzw. der Aufhebung nachteiliger Folgen einer Desorption vorteilhaft sein. So kann z.B. ein Aktivkohlebestanteil oder Zeolithbestandteil einen Geruch oder einen Geruchsstoff rascher adsorbieren als Zink-Ricinoleat. Wird der adsorbierte Geruchsstoff nachfolgend z.B. im Sinne der Einstellung eines Gleichgewichts mit der Umgebungsatmosphäre allmählich wieder desorbiert, und steht Zink-Ricinoleat in räumlicher Nähe zur irreversiblen Bindung zur Verfügung, kann das in der Summe zu einer Verbesserung des Adsorptionsverhaltens führen.

Eine Möglichkeit der Kombination verschiedener Geruchsadsorber/Geruchsabsorber besteht z.B. darin, dass man der bereits angesprochenen Imprägnierflotte (die fein dispergiertes Zink-Ricinoleat enthält) auch noch einen Zeolith-Bestandteil zusetzt, um die Geruchsadsorptionskapazität des hergestellten Materials zur erhöhen oder eine kostengünstigere Ausrüstung zu erhalten. Ferner kann z.B. auf ein Flächengebilde mit einem einimprägniertem Zeolithadsorber, z.B. ein Material gemäß EP 1 674 014 A1, eine Schicht erstarrter feiner Zink-Ricinoleat-Tröpfchen aufgebracht werden, die als sekundäre, irreversible Absorberschicht zur Feinreinigung oder Nachreinigung wirkt. Es ist auch möglich, ein Flächengebilde mit Geruchsabsorber gemäß der vorliegenden Erfindung abstromseitig hinter einem getrennten luftdurchlässigen Geruchsabsorber mit Zeolithbeladung, z.B. gemäß EP 1 674 014 A1, anzuordnen, um die o.g. synergistischen Wirkungen zu erzielen.

Weitere Kombinationsmöglichkeiten, die sich für den Fachmann aus den obigen Ausführungen ergeben, liegen ebenfalls ausdrücklich im Bereich der vorliegenden Erfindung.

Nachfolgend wird die Erfindung anhand von einigen konkreten Ausführungsbeispielen noch näher illustriert.

### Beispiele:

Vorbemerkung: Soweit sich aus dem Textzusammenhang nichts anderes ergibt, sind in der vorliegenden Beschreibung und den Beispielen alle Angaben in % Angaben in Massen-%.

Die in der Beschreibung und in den Beispielen angegebenen technischen Kenndaten wurden nach einschlägigen normierten Bestimmungsverfahren ermittelt, die in den nachfolgenden Klammerausdrücken angeführt werden: Flächenmasse (DIN EN ISO 536); Dicke (DIN EN 20534; Tasterdruck 10 N); Luftdurchlässigkeit (DIN EN ISO 9237 bei 200 Pa); Berstdruck (in Anlehnung an DIN EN ISO 2758, Prüffläche 10 cm²); Bruchkraft (DIN EN ISO 1924-2).

### Beispiel 1:

### Erzeugung eines geruchsadsorbierenden hoch luftdurchlässigen Papiers zur Anwendung in Staubsaugerfilterbeuteln

Ein nach dem Nasslegeverfahren hergestelltes Filterpapier mit der Faserzusammensetzung 75 Gew. % südliche gebleichte Zellstoff-Langfaser, 10 Gew.% gebleichte Eukalyptusfasern und 15 Gew.% Polyesterfasern 1,7 dtex/12 mm wurde mit der nachfolgend beispielhaft beschriebenen Leimflotte imprägniert.

Zur Zubereitung der Leimflotte wird in einem Mischtank Wasser bei einer Temperatur von < 25 °C vorgelegt, und unter starkem Rühren wird langsam eine auf 80 °C temperierte 50%ige Lösung von Zink-Ricinoleat in Triethanolamin zugegeben. Dabei kommt es zur feindispersen Ausfällung des Adsorbers in der Wasserphase. Nach vollendeter Zugabe werden die weiteren Komponenten der Bindermischung zugegeben: in Wasser gelöste Stärke, Latex (Polyvinylacetat), Netzmittel, Farbe, Biostat-Wirkstoff. Mit dieser Flotte wird das Rohpapier anschließend in einer Leimpresse imprägniert und danach mit einem Durchlufttrockner bei einer Lufttemperatur von 200 °C getrocknet.

Eine beispielhafte Rezeptur der genannten Leimflotte ist wie folgt:
89,31 % Wasser
1,37 % Zink-Ricinoleat
1,23 % Triethanolamin
5,74 % oxidativ abgebaute Kartoffelstärke
2,06 Polyvinylacetat
0,29 % Biostat

Das imprägnierte Filterpapier setzte sich aus 90 Gew.% Fasern und 10 Gew.% Bindemittel zusammen. Der Gehalt an Zink-Ricinoleat im Fertigprodukt betrug ca. 1,28 Gew. %.

An diesem Filterpapier (interne Bezeichnung: E 50 M biostat ZnR) wurden folgende Produktmerkmale gemessen:
Flächenmasse: 53,8 g/m²
Luftdurchlässigkeit: 200 l/m²s
Berstdruck: 131 kPa
Bruchkraft längs: 44,5 N
Bruchkraft quer: 20,9 N.

Das mit dem Zink-Ricinoleat ausgerüstete Papier zeigte praktisch die gleichen Produktmerkmale wie das entsprechende Papier ohne Zink-Ricinoleat (Bezeichnung: Referenz-Papier E 50 M biostat).

### Beispiel 2:

### Erzeugung einer geruchsadsorbierenden, aus synthetischen Fasern bestehenden Schicht zur Verwendung in einem mehrlagig aufgebauten Staubsaugerfilterbeutel

Allgemein gesprochen wird hierbei ein faseriges Flächengebilde, nass oder trocken gelegt, bestehend aus synthetischen Fasern (Polyolefine, Polyester) mit einem Flächengewicht von 10 bis 80 g/m² und einer Dicke von 0,1 bis 5 mm in einem Tauchbad mit einer Dispersion von Zink-Ricinoleat in einem Lösungsmittel benetzt und anschließend in einem Durchlufttrockner bei mindestens 150 °C getrocknet. Die Trocknung bewirkt das Verdampfen des Lösungs- und Dispergiermittels unter gleichzeitigem Aufschmelzen und Aufziehen des dispergierten Zink-Ricinoleats auf die Fasern des Trägermaterials.

Bei einer konkreten beispielhaften Ausführungsform war die Zusammensetzung der Imprägnierdispersion wie folgt:
95 % Wasser
2,5 % Zink-Ricinoleat
2,5 % ethoxylierte Fettsäureester C12-C15

Ausgehend von einem nassgelegten Vlies aus 20 Gew. % Zellstoff, 60 Gew. % Polyesterfasern und 20 Gew. Bikomponentenfasern (Kern Polyethylenterephthalat, Mantel Polyethylen) mit einer Flächenmasse von 60 g/m², einer Dicke von 0,42 mm und einer Luftdurchlässigkeit von 3450 l/m²s wurde durch Imprägnieren mit der o. g. Imprägnierflotte und anschließendes Trocknen ein erfindungsgemäßes Flächengebilde mit einer Imprägnierung mit einem Zink-Ricinoleat-Geruchsabsorber hergestellt.

Der Gehalt an Additiven nach der Imprägnierung, ermittelt durch die Gewichtszunahme, betrug 2,85 Gew. %, was einem Zink-Ricinoleat Gehalt von ca. 1,43 Gew. % entspricht. Das imprägnierte Produkt hatte praktisch die gleiche Luftdurchlässigkeit wie das Ausgangsprodukt.

### Beispiel 3:

### Erzeugung einer geruchsadsorbierenden spinnvlieslage zur Verwendung in einem mehrlagig aufgebauten Filtermedium für Staubsaugerbeutel

Auf ein Polypropylen-Spinnvlies mit einer Flächenmasse von 25 g/m², mit einer Dicke von 0,22 mm und einer Luftdurchlässigkeit von 2730 l/m²s wurde mittels einer Hotmelt-Sprühanlage Typ UFD der Fa. ITW Dynatec Zink-Ricinoleat als Schmelzenebel aufgebracht. Die Sprühanlage erzeugt feinste Tröpfchen, die sich vor dem Auftreffen auf das Substrat soweit abgekühlt hatten, dass sie auf der Oberfläche des Spinnvlieses haften.

Die Auftragsmenge wird durch die Förderleistung der Schmelzepumpe und die Geschwindigkeit, mit der das Trägermaterial unter dem Auftragsbalken vorbeigeführt wird, gesteuert. Die Auftragsmenge Zink-Ricinoleat betrug ca. 2,5 g/m². Die Luftdurchlässigkeit und die Dicke des Ausgangs-Spinnvlieses wurden durch den Auftrag des Absorbers praktisch nicht verändert.

Dieses mit Zink-Ricinoleat behandelte Spinnvlies wurde anschließend mit einer Meltblownlage von 25 g/m² und zwei Lagen Polypropylen Spinnvlies 14 g/m² zu dem vierlagigen Filtermedium laminiert und erhielt die interne Bezeichnung MBK 671-D14L ZnR . Die Verbindung der Lagen erfolgte durch Ultraschalltechnik unter Verwendung eines rautenförmigen. Punktdesigns. Der Durchmesser der Verfestigungspunkte betrug 1,5 mm, und die Pressfläche 1,2 % (Flächenanteil Bindepunkte bezogen auf die Gesamtfläche).

Im Vergleich zu einem Laminat eines sonst gleichen Aufbaus, aber unter Einsatz eines 25 g/m² Spinnvlieses ohne Zink-Ricinoleat (MBK 671-D14L), wurden keine Veränderungen der Laminiereigenschaften und der Verbundfestigkeit der Lagen festgestellt.

An dem erfindungsgemäßen Produkt MBK 671-D14L ZnR wurden folgende Produktmerkmale ermittelt:
Flächenmasse: 80,5 g/m²
Dicke: 0,515 mm
Luftdurchlässigkeit: 355 l/m²s.

Dicke und Luftdurchlässigkeiten entsprechen praktisch denen der Referenzsorte MBK 671-D14L (ohne Zink-Ricinoleat). Die Flächenmasse war bedingt durch den Absorberauftrag von 2,5 g/m² höher als bei der Referenzsorte.

### Beispiel 4.

### Erzeugung eines geruchsadsorbierenden, überwiegend aus pflanzlichen Fasern bestehenden Papiers zur Verwendung in Form von Tüten in Abfallbehältnissen

Eine Schmelze von Zink-Ricinoleat wird wie in Beispiel 3 mittels einer Hotmelt-Sprühanlage Typ UFD der Firma ITW Dynatec auf ein Substrat aufgebracht. Der Abstand ist so gewählt, dass im Zeitraum zwischen Austritt der Schmelze aus den Sprühdüsen und der Ablage auf dem darunter geförderten Substrat ein Abkühlen und Erstarren der Tröpfchen oder Filamente stattfindet. Unterstützt wird dieser Prozess durch das Einblasen gekühlter Luft in den Sprühvorhang. Nach Ablage auf dem Substrat wird die ausgerüstete Schicht mit einer weiteren Lage eines flächigen Geleges abgedeckt und wahlweise durch Ultraschall-Verschweißung (bei voll- oder teilsynthetischen Flächengelegen) oder Thermokalandrieren geschützt und verfestigt.

Verarbeitungstemperatur: 150 °C, Flächenauftrag ca. 2 g/m².

### Beispiel 5:

### Erzeugung eines geruchsadsorbierenden, aus synthetischen Fasern bestehenden Filtermaterials zur Verwendung in Dunstabzugshauben

Auf ein in Dunstabzugshauben eingesetztes Krempelvlies aus verfestigten Polyesterfasern von ca. 350 g/m² wird mit einer Hotmelt-Sprühanlage Typ UFD der Firma ITW Dynatec das Zink-Ricinoleat in geschmolzener Form aufgesprüht. Verarbeitungstemperatur 150 °C; Auftragsgewicht ca. 10 g/m²

Alle aufgeführten Beispiele zeigen beim Vergleich der Produktmerkmale identischer Produkte mit und ohne Zink-Ricinoleat praktisch die gleichen technischen Werte der Produktmerkmale Luftdurchlässigkeit, Dicke, Bruchkraft und Porendurchmesser, und eine entsprechende Verarbeitbarkeit. Die Aufrechterhaltung der Werte für die Luftdurchlässigkeit und die mechanischen Eigenschaften ist besonders für die Anwendung als geruchsabsorbierendes Filtermedien von entscheidender Bedeutung.

### Beispiel 6:

### Prüfung der geruchsabsorbierenden Eigenschaften von Flächengebilden gemäß den Beispielen 1 und 3

Die Geruchsabsorptionseigenschaften eines erfindunggemäßen behandelten Papiers gemäß Beispiel 1 (E 50 M biostat ZnR) wurde im Vergleich zu einem gleichen Produkt ohne Zink-Ricinoleat (E 50 M biostat) durch olfaktometrische Bestimmung gemäß DIN EN 13725 ermittelt.

Das Gleiche geschah mit den Materialien MBK 671-D14L ZnR bzw. MBK 671-D14L gemäß Beispiel 3.

Die Olfaktometrie gemäß DIN EN 13725 beruht auf der Darbietung von Gerüchen, die ein Testpanel von i.d.R. vier Personen zu bewerten hat.

Bei der Messung wird dem Panel ein- und dieselbe Probe in verschiedenen Konzentrationen zugeführt. Die Verdünnung erfolgt mit nicht-riechender Neutralluft, z.B. Druckluft oder - bei entsprechenden Laborbedingungen - Umgebungsluft. Aus den Rückmeldungen der Prüfer wird in mehreren Messreihen der Verdünnungsfaktor ermittelt, bei dem 50% des Panels einen Geruch wahrnehmen konnten, die sogenannte "Geruchsschwelle".

Für diesen Verdünnungsfaktor ist als Grundeinheit der Geruchsstoffkonzentration die Europäische Geruchseinheit je Kubikmeter (1 GEE/m³) definiert. Die Geruchsstoffkonzentration der untersuchten Probe ist dann ein Vielfaches einer GEE/m³, entsprechend der für die Geruchsschwellenbestimmung eingestellten Verdünnung. Die Geruchsstoffkonzentration in GEE/m³ kann genauso verwendet werden wie die Massenkonzentration in kg/m³.

Bei der olfaktometrischen Bestimmung hat der jeweilige Proband des Testpanels das aus einem Riechrohr austretende Gas dahingehend zu bewerten, ob er etwas riecht oder nicht. Dabei ist sich der Proband bewusst, dass auch so genannte Nullproben an zufälligen Positionen in der Darbietungsreihe angeboten werden. Nullproben sind Proben, die nur aus Neutralluft bestehen. In diesem Modus kann dem Probanden auch noch ein Riechrohr mit Neutralluft als dauerhafte Vergleichsmöglichkeit zur Verfügung gestellt werden, was jedoch nicht zwingend erforderlich ist.

Für die Darbietungsverfahren gilt, dass jede Probe maximal für 15 s dargeboten werden darf. Ebenso muss die Pause zwischen zwei Darbietungen mindestens 30 s betragen. Beide Zeitvorgaben haben den Zweck, dass sich die Proband nicht an einen Geruch gewöhnen (Adaption).

Bestimmung der geruchsreduzierenden Eigenschaften von Medien mit geruchsadsorbierender Wirkung:

Muster aus Geruchsadsorber enthaltendem Material und identischem Vergleichsmaterial ohne Geruchsadsorber werden in einem luftdicht abgeschlossenen PET-Schlauch (Nalophan) mit dem Geruchsstoff (z.B. Essigsäure, n-Butanol) in Kontakt gebracht und eine Stunde konditioniert. Anschließend erfolgt die Bestimmung der Minderung der Geruchstoffkonzentration im abgeschlossenen Gasraum an einem Olfaktometer (Ecoma TO6) mit jeweils drei Einzelmessungen pro Materialprobe durch einen Probandenkollektiv von 4 Personen. Durch den Vergleich zwischen Nullprobe, Referenz und Entwicklungsmuster kann eine quantitative Bestimmung der geruchsmindernden Wirkung durch Zink-Ricinoleat ermittelt werden.

Bei der olfaktometrischen Prüfung der erfindungsgemäßen Materialien im Vergleich mit Bezugsmaterialien wurden folgende Ergebnisse erhalten:

**Tabelle 1: Papierträger gemäß Herstellungsbeispiel 1**

| | Test-Geruchsstoff | |
|---|---|---|
| | Essigsäure 98 % | n-Butanol |
| | [GEE/m³] | [GEE/m³] |
| Nullprobe | 12000 | 13000 |
| Referenz-Papier E50M biostat | 800 | 13000 |
| Probe Papier E50M biostat ZnR | 300 | 7300 |

**Tabelle 2: Vollsynthetische Träger gemäß Beispiel 3**

| | Test-Geruchsstoff | |
|---|---|---|
| | Essigsäure 98% | n-Butanol |
| | [GEE/m³] | [GEE/m³) |
| Nullprobe | 12300 | 15500 |
| Referenz-Synthese MBK671-D14L | 10321 | 6100 |
| Probe Synthese MBK671-D14L ZnR | 348 | 3100 |

## Patentansprüche

1. Verwendung eines geruchsabsorbierenden luftdurchlässigen Flächengebildes aus pflanzlichen und/oder synthetischen Fasern, das auf der freien Faseroberfläche Zink-Ricinoleat in einer Menge im Bereich von 0,1 bis 20 Gew.-%, bezogen auf das Gewicht des Flächengebildes, in Form feinverteilter fester Teilchen mit einer Partikelgröße mit einem Durchmesser von <0.5 mm aufweist, zur Geruchsbeseitigung in statischen Gasräumen.

2. Verwendung nach Anspruch 1, wobei das verwendete Flächengebilde ein Flächengebilde auf Papier- und/oder Vliesbasis ist und/oder ein textiles Flächengebilde ist.

3. Verwendung nach Anspruch 1 oder 2, wobei das verwendete Flächengebilde das Zink-Ricinoleat wenigstens auf einer seiner Seiten in Form diskreter erstarrter Tröpfchen aufweist.

4. Verwendung nach Anspruch 1, 2 oder 3, wobei das feste zink-Ricinoleat auf die Fasern des verwendeten Flächengebildea aufgezogen ist und deren freie Oberfläche wenigstens teilweise bedeckt.

5. Verwendung nach einem der Ansprüche 1 bis 4 eines Flächengebildes mit einer Flächenmasse im Bereich von 10 bis 1000 g/m² und einer Luftdurchlässigkeit im Bereich von 25 bis 10 000 l/m²s als Filtermedium zur Luftfiltration.

6. Verwendung nach Anspruch 5 des Flächengebildes zur Herstellung von Staubsaugerbeuteln, wobei das Flächengebilde eine Flächenmasse im Bereich von 40 bis 300 g/m³ und eine Luftdurchlässigkeit im Bereich von 25 bis 2000 l/m³s aufweist.

7. Verwendung nach einem der Ansprüche 1 bis 6 eines Flächengebildes, das außerdem als luftdurchlässige Imprägnierung oder Beschichtung auf wenigstens einer seiner Seiten wenigstens ein weiteres Material mit geruchsadsorbierenden Eigenschaften aufweist.

8. Verwendung nach Anspruch 7, wobei das Flächengebilde wenigstens ein weiteres Material mit geruchsadsorbierenden Eigenschaften enthält, das ausgewählt ist aus Aktivkohle, Zeolithen und Cyclodextrinen.

9. Verwendung nach einem der Ansprüche 1 bis 8, wobei das Flächengebilde Teil eines Lagenverbunds mit anderen Flächengebilden ist.

10. Verfahren zur Herstellung eines geruchsabsorbierenden Flächengebildes, das auf der freien Faseroberfläche Zink-Ricinoleat in einer Menge im Bereich von 0,1 bis 20 Gew.-%, bezogen auf das Gewicht des Flächengebildes, in Form feinverteilter fester Teilchen mit einer Partikelgröße mit einem Durchmesser von <0.5 mm aufweist und für eine Verwendung nach Anspruch 1 geeignet ist, das die Schritte umfasst
- Bereitstellen eines Flächengebildes aus pflanzlichen und/oder synthetischen Fasern;
- Bereitstellen einer verdünnten Dispersion, die feinverteilte Teilchen von Zink-Ricinoleat enthält, durch Eintrag einer Lösung oder Schmelze von Zinkricinolet in ein in einem großen Überschuss vorliegendes Dispergiermittel;
- Aufbringen der Dispersion, die die feinverteilten Teilchen von Zink-Ricinoleat enthält, wenigstens einseitig auf die Oberfläche des Flächengebildes, so dass die Faseroberfläche wenigstens teilweise mit Zink-Ricinolet imprägniert wird; und
- Erwärmen und Trocknen des mit der Dispersion behandelten Flächengebildes.

11. Verfahren nach Anspruch 10, wobei die Dispersion eine wässrige Dispersion ist und das Aufbringen unter Verwendung einer Leimpresse oder durch Eintauchen des Flächengebildes in die Dispersion erfolgt.

12. Verfahren zur Herstellung eines geruchsabsorbierenden Flächengebildes, das auf der freien Faseroberfläche Zink-Ricinoleat in einer Menge im Bereich von 0,1 bis 20 Gew.-%, bezogen auf das Gewicht des Flächengebildes, in Form feinverteilter fester Teilchen mit einer Partikelgröße mit einem Durchmesser von <0.5 mm aufweist und für eine Verwendung nach Anspruch 1 geeignet ist, das die Schritte umfasst
- Bereitstellen eines Flächengebilde aus pflanzlichen und/oder synthetischen Fasern;
- Bereitstellen einer Schmelze von Zink-Ricinoleat in einer zum Versprühen oder zur Filamentbildung geeigneten Abgabevorrichtung;
- Abgabe der Schmelze von Zink-Ricinoleat in der Nähe des Flächengebildes in Form eines Nebels aus feinen Tröpfchen oder in Form von feinen Filamenten auf eine weise, dass sich das zink-Ricinoleat wenigstens einseitig in feinverteilter Form auf der Oberfläche des Flächengebildes abscheidet und dort erstarrt; sowie gegebenenfalls
- Erwärmen und Nachbehandeln des oberflächlich mit zink-Ricinoleat behandelten Flächengebildes zur weiteren Verteilung des Zink-Ricinoleats auf der Faseroberfläche.

## Claims

1. Use of an odour-absorbing air-permeable sheet made from vegetable and/or manmade fibres, which has on its free fibre surface zinc ricinoleate in an amount in a range of 0.1 to 20% by weight, based on the weight of the sheet, in the form of finely divided solid particles of a particle size with a diameter of <0.5 mm, for odour elimination in static gas spaces.

2. Use according to claim 1, wherein the sheet to be used is a sheet based on paper and/or a non-woven or a textile fabric.

3. Use according to claim 1 or claim 2, wherein the sheet to be used has the zinc ricinoleate on at least one of its sides in the form of discrete solidified droplets.

4. Use according to claim 1, 2 or 3, wherein the solid zinc ricinoleate is adsorbed onto the fibres and at least partly covers the free surface thereof.

5. Use according to any one of claims 1 to 4 of a sheet having a mass per unit area in a range of 10 to 1000 g/m² and an air permeability in a range of 25 to 10 000 l/m²s as a means for the filtration of air.

6. Use according to claim 5 of the sheet for the production of vacuum cleaner bags, wherein the sheet has a mass per unit area in a range of 40 to 300 g/m² and an air permeability in a range of 25 to 2000 l/m²s.

7. Use according to any one of claims 1 to 6 of a sheet further comprising at least one additional material having odour-adsorbing properties in the form of an air-permeable impregnation or coating on at least one of its sides.

8. Use according to claim 7, wherein the filter medium contains at least one additional material having odour-adsorbing properties selected from active carbon, zeolites and cyclodextrins.

9. Use according to any one of claims 1 to 8, wherein the sheet is part of a layered composite with other sheets.

10. A method for the production of an odour-absorbing sheet which has on its free fibre surface zinc ricinoleate in an amount in a range of 0.1 to 20% by weight, based on the weight of the sheet, in the form of finely divided solid particles of a particle size with a diameter of <0.5 mm and which is suitable for a use according to claim 1, comprising the steps:
- providing a sheet made from vegetable and/or manmade fibres;
- providing a dilute dispersion containing finely divided particles of zinc ricinoleate by admixing a solution or melt of zinc ricinoleat in a dispersing agent present in a great excess;
- applying the dispersion containing finely divided particles of zinc ricinoleate to the surface of the sheet on at least one side so that the fibre surface is at least partly impregnated with zinc ricinoleate;
and
- heating and drying the sheet treated with the dispersion.

11. Method according to Claim 10, wherein the dispersion is an aqueous dispersion and the application is effected by using a size press or by immersiing the sheet in the dispersion.

12. A method for the production of an odour-absorbing sheet which has on its free fibre surface zinc ricinoleate in an amount in a range of 0.1 to 20% by weight, based on the weight of the sheet, in the form of finely divided solid particles of a particle size with a diameter of <0.5 mm and which is suitable for a use according to claim 1, comprising the steps of:
- providing a sheet made from vegetable and/or manmade fibres;
- providing a melt of zinc ricinoleate in a dispensing apparatus suitable for atomization or for filament formation;
- dispensing the melt of zinc ricinoleate in the vicinity of the sheet in the form of a mist of fine droplets or in the form of fine filaments in such a way that the zinc ricinoleate is deposited in finely divided form on a surface of the sheet on at least one of its sides, and solidifies there; and optionally
- heating and aftertreating the sheet treated on its surface with the zinc-ricinoleate for further spreading of the zinc ricinoleate over the fibre surface.

## Revendications

1. Utilisation d'une structure surfacique perméable à l'air et absorbant les odeurs, constituée de fibres végétales et/ou synthétiques, qui comporte sur la surface libre des fibres du ricinoléate de zinc dans une quantité dans la plage de 0,1 à 20 % en poids, par référence au poids de la structure surfacique, sous la forme de particules solides finement réparties, avec une taille de particules présentant un diamètre < 0,5 mm, pour l'élimination d'odeurs dans des chambres de gaz statiques.

2. Utilisation selon la revendication 1, dans laquelle la structure surfacique utilisée est une structure surfacique à base de papier et/ou de non-tissé, et/ou est une structure surfacique textile.

3. Utilisation selon la revendication 1 ou 2, dans laquelle la structure surfacique utilisée comporte le ricinoléate de zinc sur l'un au moins de ses côtés sous la forme de gouttelettes figées discrètes.

4. Utilisation selon la revendication 1, 2 ou 3, dans laquelle le ricinoléate de zinc solide est appliqué sur les fibres de la structure surfacique utilisée et recouvre au moins partiellement sa surface libre.

5. Utilisation selon l'une des revendications 1 à 4 d'une structure surfacique avec une masse surfacique dans la plage de 10 à 1000 g/m² et une perméabilité à l'air dans la plage de 25 à 10 000 l/m²s à titre de média filtrant pour la filtration de l'air.

6. Utilisation selon la revendication 5 de la structure surfacique pour la fabrication de sacs pour aspirateurs, dans laquelle la structure surfacique présente une masse surfacique dans la plage de 40 à 300 g/m³ et une perméabilité à l'air dans la plage de 25 à 2000 l/m²s.

7. Utilisation selon l'une des revendications 1 à 6 d'une structure surfacique, qui comporte en outre au moins un autre matériau présentant des propriétés d'absorption des odeurs à titre d'imprégnation ou de revêtement perméable à l'air sur l'un au moins de ses côtés.

8. Utilisation selon la revendication 7, dans laquelle la structure surfacique contient au moins un autre matériau présentant des propriétés d'absorption des odeurs, choisis parmi charbon actif, zéolithes et cyclodextrines.

9. Utilisation selon l'une des revendications 1 à 8, dans laquelle la structure surfacique fait partie d'un composite de couches avec d'autres structures surfaciques.

10. Procédé pour la fabrication d'une structure surfacique absorbant les odeurs, qui comporte sur la surface libre des fibres du ricinoléate de zinc dans une quantité dans la plage de 0,1 à 20 % en poids, par référence au poids de la structure surfacique, sous la forme de particules solides finement réparties avec une taille de particules présentant un diamètre < 0,5 mm, et qui convient pour une utilisation selon la revendication 1, incluant les étapes consistant à :
- préparer une structure surfacique à partir de fibres végétales et/ou synthétiques ;
- préparer une dispersion diluée qui contient des particules finement réparties de ricinoléate de zinc, par apport d'une solution ou d'une fusion de ricinoléate de zinc dans un milieu de dispersion se présentant dans un excédent important ;
- appliquer la dispersion, qui contient les particules finement réparties de ricinoléate de zinc, au moins sur un côté sur la surface de la structure surfacique, de sorte que la surface des fibres est au moins partiellement imprégnée avec le ricinoléate de zinc ; et
- chauffer et sécher la structure surfacique traitée avec la dispersion.

11. Procédé selon la revendication 10, dans lequel la dispersion est une dispersion aqueuse, et l'application a lieu en utilisant une presse d'encollage, ou en plongeant la structure surfacique dans la dispersion.

12. Procédé pour la fabrication d'une structure surfacique absorbant les odeurs, qui comporte sur la surface libre des fibres du ricinoléate de zinc dans une quantité dans la plage de 0,1 à 20 % en poids, par référence au poids de la structure surfacique, sous la forme de particules solides finement réparties avec une taille de particules présentant un diamètre < 0,5 mm, et qui convient pour une utilisation selon la revendication 1, incluant les étapes consistant à :
- préparer une structure surfacique à partir de fibres végétales et/ou synthétiques ;
- préparer un bain de fusion de ricinoléate de zinc dans un dispositif de distribution approprié pour la pulvérisation ou pour la formation de filaments ;
- distribuer le bain de fusion de ricinoléate de zinc au voisinage de la structure surfacique sous la forme d'un brouillard de fines gouttelettes ou sous la forme de filaments fins, de telle manière que le ricinoléate de zinc se dépose au moins sur un côté sous forme finement répartie sur la surface de la structure surfacique et s'y fige ; et le cas échéant
- chauffer et post-traiter la structure surfacique traitée en surface avec le ricinoléate de zinc pour poursuivre la répartition du ricinoléate de zinc sur la surface des fibres.
